Europäisches Patentamt

(19) **European Patent Office**

**Office européen des brevets**

(11) Publication number: **0 086 935**
**B1**

(12) **EUROPEAN PATENT SPECIFICATION**

(45) Date of publication of patent specification: **12.08.87**

(51) Int. Cl.⁴: **D 06 F 35/00, D 06 F 43/00**

(21) Application number: **83100137.5**

(22) Date of filing: **10.01.83**

(54) **Foam washing method.**

(30) Priority: **23.02.82 JP 27797/82**

(43) Date of publication of application:
**31.08.83 Bulletin 83/35**

(45) Publication of the grant of the patent:
**12.08.87 Bulletin 87/33**

(84) Designated Contracting States:
**BE DE FR GB IT LU NL SE**

(56) References cited:
**DE-A-2 849 038**
**DE-A-2 904 058**
**DE-B-1 208 458**
**DE-B-2 016 037**

(73) Proprietor: **Takasago Perfumery Co., Ltd.**
**No. 19-22, Takanawa 3-chome**
**Minato-ku Tokyo (JP)**

(72) Inventor: **Motoi, Minagawa**
**9-20-413, Iwazono-cho**
**Ashiya-shi Hyogo (JP)**

(74) Representative: **Hansen, Bernd, Dr.rer.nat. et al**
**Hoffmann, Eitle & Partner Patentanwälte**
**Arabellastrasse 4**
**D-8000 München 81 (DE)**

**Description**

The present invention relates to a novel washing method of the type of economizing resources and energy, which is completely different from the conventional washing method of the type of immersing in water. More particularly, it relates to a novel washing method in which dirt is separated and removed from clothes utilizing foam formed from a concentrated aqueous solution of a detergent without using water or organic solvents as a medium.

Hitherto, washing of clothes has been carried out generally by immersing the clothes in a washing solution prepared by dissolving a detergent in cool water or hot water and mechanically stirring by means of a washing machine. Such a washing method of the type of immersing in water requires to use water and detergent in large amounts of 20 to 50 l water and 40 to 50 g the detergent per kg of the clothes, because the clothes should be completely immersed in the washing solution.

However, in the recent years, with an increase of population, water becomes rare, and pollution of the quality of water caused by waste washing solution becomes a big social problem due to insufficient waste water disposal plants.

From DE—A—2 904 058 a washing method for carpets is known which comprises forming foam by blowing a high pressure air into a detergent solution, coating the foam thus formed on the carpet using a rotating brush to permeate the foam therein, separating and removing the soil in the carpet by the force of the detergent, sucking up foam containing soil, permeating a cleansing solution into the carpet and sucking up the cleansing solution containing the detergent. Futhermore, DE—A—2 016 037 describes an apparatus for washing cloth using bubbles which are sandwiched between guide rolls and the clothes in a detergent solution. The bubbles burst and by the burst pressure the detergent solution inserts into the clothes and a part of the detergent solution permeates through the clothes, whereby an effective washing can be conducted. The object of the present invention is to provide a method for soil textile goods which can be affected with very small amounts of water and a detergent, and by which clothes can be cleaned in a very simple way and without any mechanical agitation.

The invention relates to a foam washing method for soiled textile goods in which foam is formed by blowing a gas through a concentrated aqueous solution of a detergent, and thereafter said foam is brought into contact with said soiled textile goods to separate and remove dirt adhered to fibers of said textile goods, and is characterized in that the textile goods are clothes and the washing is carried out without mechanical agitation.

Figure 1 is a cross-sectional view of one example of washing machines suitable to perform the method of the present invention, wherein 1 is an outer cylinder, 2 is an inner cylinder, 3 is a heating metal plate for defoaming and 4 is a reservoir for a washing solution.

Figure 2 and Figure 3 are graphs showing a washing effect of the method of the present invention and that of the conventional method.

Figure 4 is microscopic photographs showing the state of the fibers washed with the method of the present invention and that washed with the prior method.

Figure 5 is a graph showing a microbe removal effect obtained by the method of the present invention and that obtained by the conventional method.

The textile goods which can be treated with the method of the present invention can be composed of any natural fibers and synthetic fibers. Any shapes such as fibrous form, yarns, clothes such as woven clothes or knitting clothes, nonwoven clothes, processed goods, etc, can be used.

The detergents used in the present invention can be suitably selected from natural and synthetic detergents conventionally used for washing. Of those detergents, soaps such as alkali metal salts of higher aliphatic acid or foamable detergents such as an ethylene oxide adduct of amide are particularly preferred. These detergents are used in the form of an aqueous solution having a far higher concentration, for example, a concentration of 0.3 to 1.0 weight %, than in case of conventional washing. This aqueous solution can be used at room temperature, but it is advantageous to use it with heating to 40 to 70°C because the washing efficiency is remarkably improved.

As is different from the case of the conventional type of immersing in water, since the washing is not necessary to be completely immersed in the washing solution, it is sufficient in the present invention to use the concentrated aqueous solution of the detergent in an amount of 1 to 2 l based on 1 kg of the washing.

It is necessary in the present invention to form foam by blowing gas through the concentrated aqueous solution of the detergent. As the gas used, air is most preferred. Air heated to 40 to 80°C or more is particularly advantageous to form a high temperature foam having high washing ability.

In addition, inert gases such as nitrogen, carbon dioxide, etc., can be used. Hot waste gases generated in various industrial fields can be also used.

The contact time between foams and the clothes in the present invention is about 5 to 10 minutes, which is fairly shorter than 10 to 15 minutes in the conventional washing method of the type of immersing in water. Further, the amount of washing water adhered to and remained on the washing is so small that rinsing can be completely carried out by showering only one time with 15 to 20 l of washing water, though the conventional method requires rinsing at least two times with 100 to 110 l of washing water.

It is advantageous in the present invention that the concentrated aqueous solution of the detergent is regenerated by subjecting foam after use for clothes by bringing into contact with the clothes, to a defoaming treatment, and is then recycled for reuse. This defoaming treatment can be carried out, for example, by bringing the foam into contact with a heated metal plate. In this treatment, since microorganisms such as bacteria or molds adhering to the washing and migrating into foam are killed by heating the metal plate to 100°C or more, there is an advantage that sterilization can be carried out simultaneously with washing.

A preferred embodiment of the method of the present invention is explained by reference to the accompanying drawings.

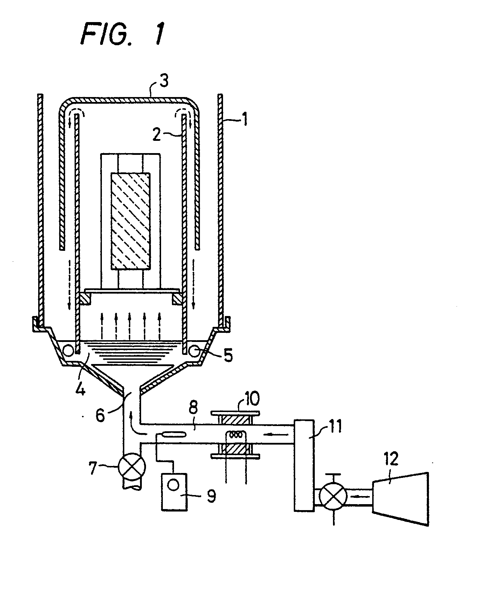

Figure 1 is a cross-sectional view showing one example of washing machines used in the method of the present invention. This washing machine is made up of a washing container comprising an inner cylinder 2 disposed in the inside of an outer cylinder 1, a heated metal plate cover 3 for defoaming provided on the top of the inner cylinder, and the bottom which is a reservoir 4 for the concentrated aqueous solution, a heater 10 for the gas which is connected with a pipe 8 communicating with a blowing opening 6 on the bottom of the washing container, and a motor 12 for blowing the gas.

Washing of clothes using the washing machine having such a structure is conducted in the following manner.

The clothes are introduced into the inside of the inner cylinder 2, and the reservoir 4 is filled with a soap solution having a concentration of 0.3 to 1.0 wt % which is heated to 30 to 70°C by a heater 5. Then, the motor 12 is driven, an air previously controlled by a flow meter is blown through the soap solution from the blowing opening 6 at a rate of 20 to 40 l/minute while adjusting the temperature of air to 30 to 80°C by a heater 10 and a thermostat 9. By this treatment, a large amount of foam is continuously formed. The foam gradually rises in the inner cylinder 2, contacts the clothes filled therein to separate dirt adhering thereto, and contacts the heating metal plate 3 at the top, carrying the dirt. When the foam contacts the heating metal plate 3, it is broken to become the soap solution again and the solution falls down along the outside wall of the inner cylinder 2 and returns to the reservoir 4. After washing for 5 to 10 minutes, the blowing motor 12 is stopped, a valve 7 in the bottom portion of the washing container is opened, and rinsing is carried out by scattering water from a shower (not shown in the drawing) arranged at the upper portion. It is sufficent that the amount of water necessary for washing and rinsing is about ⅕ time the amount of water required in the conventional washing machine and about ¼ the amount of water required in a water economizing type washing machine.

By the above treatment, since foam containing soap in a high concentration is brought into contact with the clothes and a part of the foam is broken to produce a soap solution having a high concentration, by which the clothes are wetted, washing can be carried out with a very high efficiency. Further, since the foam and the soap solution regenerated therefrom are heated to 30°C or more, they have high ability to solubilize oil stains and, consequently, oils and fats or proteins adhering to underwears, etc., which are difficult to remove can be easily liquefied and removed.

Further, since the foam generally has a high absorbing property, dirt and particles separated from the clothes are carried away outside the system by the foam. Accordingly, dirt and particles once separated do not contact the clothes again and there is no possibility of resoiling as in the conventional washing.

As described above, the method of the present invention has the following advantages.

(1) The amounts of water and the detergent can be greatly economized and, consequently, the amount of waste solution can be remarkably reduced.

(2) Damages to clothes is hardly observed since mechanical friction does take place during washing.

(3) Noise can be remarkably reduced due to unnecessity of using a motor for mechanical agitation.

(4) The washing effect is improved and a sufficient whitening can be achieved due to no possibility of resoiling.

(5) Sterilisation treatment can be carried out simultaneously with washing by using a heated aqueous solution of the detergent.

Unless otherwise indicated, all percents, parts, ratios and the like are by weight.

## Example 1

Using a washing machine having the structure as shown in Figure 1, neck-soiled clothes (naturally soiled clothes) were washed with foam for 5 to 30 minutes with a 0.5 % aqueous solution of sodium palmitate adjusted to 70°C. The bath ratio (weight ratio of the washing solution to the clothes) was 1:1.

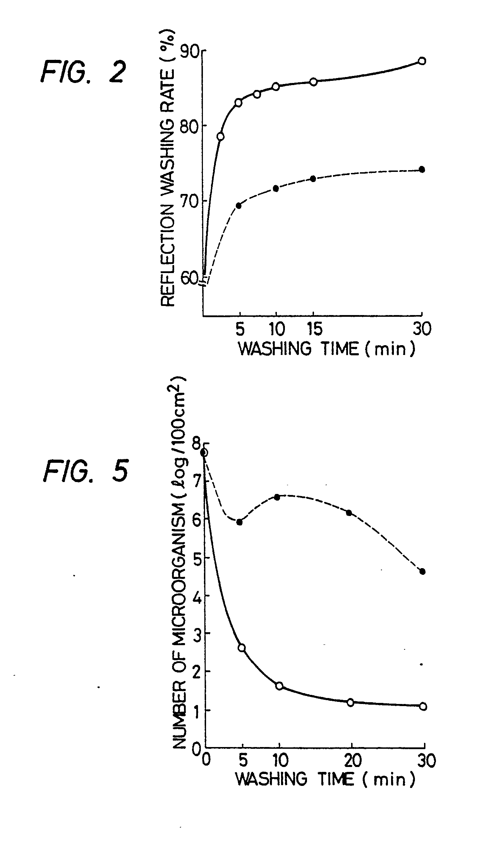

Then, the clothes were rinsed with water by showering, followed by drying in air. A reflection washing rate was determined by measuring a surface reflectance of the clothes by means of a photoelectric reflection meter using a green filter. The result is shown as a solid line in Figure 2.

For the sake of comparison, washing by the conventional method was conducted using a 0.17 % aqueous solution of the same soap by means of a Terg-O-Tometer. The washing conditions were a bath ratio of 1:300, a temperature of 40°C, a stirring rate of 100 rpm and a treating time of 5 to 10 minutes.

The test clothes thus treated were measured by the same manner as described above to determine a reflection washing rate. The result is shown as a dotted line in Figure 2.

As is apparent from these two graphs, a very high washing rate is obtained in the method of the present invention as compared with the conventional method.

Similarly, washing effects for dirt of proteins in epidermis stratum corneum which were difficult to remove were examined. Results are shown in the following table.

3

| Method of Washing | Washing rate (%) |
|---|---|
| Foam washing (sodium palmitate) | 91.8 |
| Immersion washing | |
| Marseille soap | 70.1 |
| Phosphate containing synthetic detergent (commercially available product) | 80.2 |
| Enzyme mixed phosphate containing synthetic detergent (commercially available product) | 86.0 |
| Non-phosphate synthetic detergent (commercially available product) | 79.8 |
| Enzyme mixed non-phosphate synthetic detergent | 82.4 |

As is apparent from the above table, the method of the present invention exhibits a remarkably excellent washing effect as compared with washing by the conventional method using soap, phosphate containing synthetic detergents and non-phosphate synthetic detergents.

Example 2

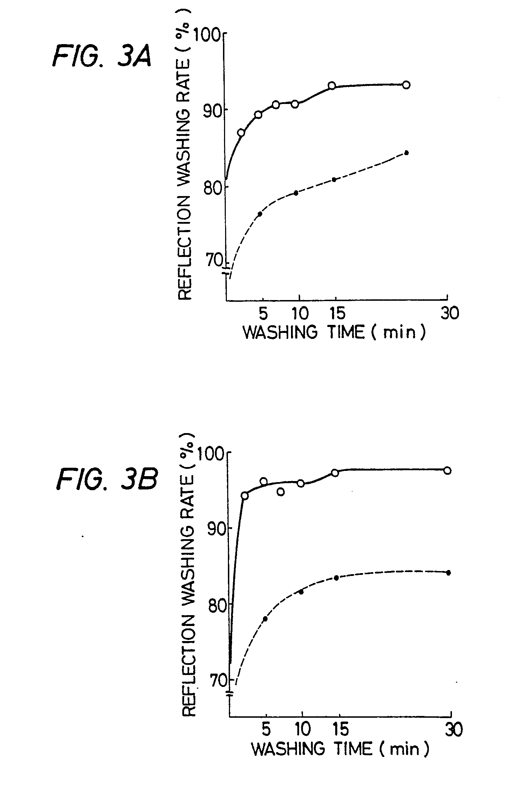

Using the same machine as in Example 1, clothes soiled with hemoglobin were washed with foam using a 0.3% aqueous solution of sodium oleate (containing 0.05% of sodium silicate) adjusted at about 50°C, followed by rinsing and drying. A relationship between washing time and the reflection washing rate and a relationship between the washing time and the removal rate of proteins are shown as solid lines in Figure 3A and Figure 3B, respectively.

Further, for the sake of comparison, results obtained by washing with the conventional method (Terg-O-Tometer; concentration of the detergent: 0.17%, bath ratio: 1:300, stirring ratio: 100 rpm, temperature: 40°C) are shown as dotted lines.

As is apparent from comparison therebetween, the foam washing is remarkably excellent in both the reflection washing rate and the removal rate of proteins.

Example 3

Neck-soiled clothes (naturally soiled clothes were washed 10 times repeatedly by foam washing (0.5% solution of sodium oleate, 30 l/minute, 70°C, 10 minutes, bath ratio of 1:1) and washing by the conventional method using Terg-O-Tometer (0.17 %) solution of sodium oleate, 100 rpm, 40 ± 2°C, 10 minutes, bath ratio 1:300).

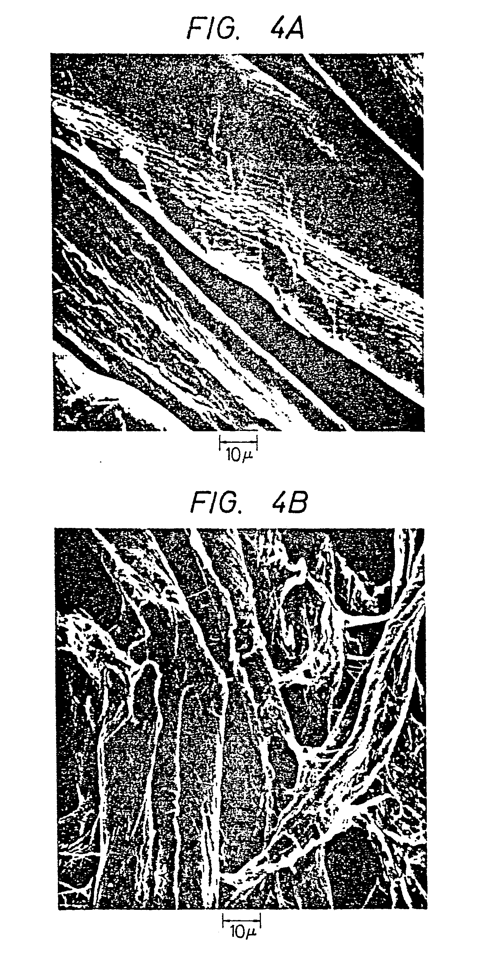

The surface state of the washed clothes was examined by a scanning electron microscope. Occurrence of fibrils on the fiber surface of the cotton cloth was not observed at all in the case of washing with foam at a low bath ratio, a high concentration and a high temperature, but fibrils were remarkably formed on the fiber surface of cotton cloth in case of washing by Terg-O-Tometer in the conventional method and collapse of fibers was partially observed, as shown in Figures 4A (the present invention) and 4B (conventional method).

It is observed that damages of textile goods which are disadvantages in the conventional method are avoided by the present foam washing method.

Example 4

Clothes soiled with Escherichia coli (standard cotton cloth: $7.4 \times 10^7/100$ cm$^2$) were subjected to foam washing (0.5% solution of sodium oleate, 30 l/minute, 70°C, 5 to 30 minutes, bath ratio of 1:1) or washing by Terg-O-Tometer in the conventional method (0.17%) solution of sodium oleate, 100 rpm, 40 ± 2°C, 5 to 30 minutes, bath ratio of 1:300). The results obtained by examining an influence of the washing time upon a microbe removal effect on the clothes are shown in Figure 5.

According to the results, it is observed by the foam washing (solid line) that with an increase in washing time, the number of microorganisms adhering to the clothes is rapidly reduced, thus an excellent microbe removal effect is achieved. On the other hand, in washing by Terg-O-Tometer in the conventional method (dotted line) it is observed that the removal of microorganisms is greatly effected within a short washing time of about 5 minutes or so, but the number of microorganisms adhering to the clothes reversely increases due to resoiling by microorganisms floating in the solution when the washing time

4

increases. However, if the washing time is further increased, it is observed that the number of microorganisms on the clothes tends to gradually decrease.

As described above, the foam washing has the advantages that a very excellent microbe removal effect is exhibited and the textile goods can maintain a sanitary effect in a high level as compared with the washing by Terg-O-Tometer in the conventional method. It is believed this is due to the fact that since the temperature of the foam during washing is as high as 65 to 70°C and microbes released by foam from the clothes are sterilized by heat during defoaming, resoiling is remarkably diminished.

## Claims

1. A foam washing method for soiled textile goods in which foam is formed by blowing a gas through a concentrated aqueous solution of a detergent, and thereafter said foam is brought into contact with said soiled textile goods to separate and remove dirt adhered to fibers of said textile goods, characterized in that the textile goods are clothes and the washing is carried out without mechanical agitation.

2. A method of claim 1, wherein said gas is heated air.

3. A method of claim 1, wherein the soiled foam is defoamed and discharged outside the system.

4. A method of claim 3, wherein the defoaming treatment is conducted by bringing foam into contact with a heated plate.

5. A method of claim 1, wherein the concentrated aqueous solution of a detergent is heated to 40 to 70°C.

## Patentansprüche

1. Schaumwaschmethode für schmutzige Textilgüter, bei der Schaum durch Einblasen eines Gases durch eine konzentrierte wässrige Lösung eines oberflächenaktiven Mittels ausgebildet wird und anschliessend der Schaum in Berührung mit den verschmutzten Textilgütern gebracht wird und Schmutz, welcher an den Fasern der Textilgüter anhaftet, entfernt wird, dadurch gekennzeichnet, dass die Textilgüter Kleidungsstücke sind und das Waschen ohne mechanische Bewegung durchgeführt wird

2. Methode gemäss Anspruch 1, bei welcher das Gas erhitzte Luft ist.

3. Methode gemäss Anspruch 1, bei welcher der schmutzige Schaum entschäumt und nach aussen aus dem System abgegeben wird.

4. Methode gemäss Anspruch 3, bei welcher die Entschäumungsbehandlung durchgeführt wird, indem man den Schaum in Berührung mit einer erhitzten Platte bringt.

5. Methode gemäss Anspruch 1, bei welcher die konzentrierte wässrige Lösung des oberflächenaktiven Mittels auf 40 bis 70°C erhitzt wird.

## Revendications

1. Un procédé de lavage par une mousse pour des matières textiles salies dans lequel on forme la mousse en insufflant un gaz dans une solution aqueuse concentrée d'un détergent puis on met cette mousse en contact avec les matières textiles salies afin d'en séparer et d'en éliminer les salissures adhérentes aux fibres de ces matières textiles, le procédé se caractérisant en ce que ces matières textiles consistent en vêtements et en ce que le lavage est réalisé en l'absence d'agitation mécanique.

2. Un procédé selon la revendication 1, dans lequel le gaz consiste en air chaud.

3. Un procédé selon la revendication 1, dans lequel la mousse chargée des salissures est abattue et rejetée à l'extérieur du système.

4. Un procédé selon la revendication 3, dans lequel l'abattement de la mousse est provoqué par le contact de la mousse avec une plaque chauffée.

5. Un procédé selon la revendication 1, dan lequel la solution aqueuse concentrée d'un détergent est chauffée à une température de 40 à 70°C.

## FIG. 1

FIG. 2

FIG. 5

*FIG. 3A*

*FIG. 3B*

*FIG. 4A*

10μ

*FIG. 4B*

10μ

4